# DEMANDE DE BREVET EUROPEEN

(11) **EP 0 587 498 A1**
(43) Date de publication de la demande: **16.03.1994**
(21) Numéro de dépôt: 93402189.0
(22) Date de dépôt: 08.09.1993
(51) Int. Cl.: B23D 51/10

(54) **Scie sauteuse à moyens de fixation rapide de lame**

(30) Priorité: 08.09.1992 FR 9210710
(71) Demandeur: PRODUCTION OUTILLAGE ELECTRIQUE et ou POE, F-25310 Herimontcourt (FR)
(72) Inventeur: Large, Marcel, F-25310 Abbevillers (FR)
(74) Mandataire: Obolensky, Michel

(57) **Abrégé**

Scie sauteuse comprenant un corps dans lequel est monté déplaçable selon un mouvement rectiligne alternatif un coulisseau (2) entraîné par un moteur électrique par l'intermédiaire de moyens de liaison mécanique et une lame de scie (3) rendue solidaire du coulisseau (2) par des moyens de fixation, caractérisée en ce que les moyens de fixation comprennent un support (12) solidaire du coulisseau (2) et qui définit avec celui-ci un passage d'engagement (10,14,15) pour la queue de la lame de scie (3) et un organe de blocage escamotable (16) solidaire du support et coopérant avec une découpe (19) de la queue de la lame de scie.

## Description

La présente invention est relative aux scies sauteuses et se rapporte plus particulièrement aux moyens de fixation d'une lame de scie sur une machine de ce type.

Une scie sauteuse comporte généralement un coulisseau entraîné selon un mouvement rectiligne alternatif par un moteur électrique auquel il est relié par une transmission de type bielle-manivelle.

Le coulisseau porte une lame de scie pourvue d'une queue de fixation à encoche, qui est fixée à celui-ci par une bride et deux vis coopérant avec une encoche ménagée dans un côté de l'extrémité de la lame fixée au coulisseau.

Par conséquent, les opérations de montage et de démontage de la lame de scie exigent l'utilisation d'un outil, généralement un tournevis.

Les pièces constitutives du mécanisme de fixation de la lame sur le coulisseau, en particulier les vis, peuvent être facilement perdues en raison de leur petite taille.

L'opération de montage et de démontage de la lame est relativement longue et malaisée à réaliser.

On connait également d'autres types de scies sauteuses dont les lames de scie présentent une extrémité de fixation munie d'une pointe à double pente et de deux talons symétriques l'un de l'autre par rapport à l'axe longitudinal de la lame.

Les machines destinées à utiliser de telles lames comportent sur le coulisseau un mandrin de réception de la lame auquel on doit faire effectuer un déplacement angulaire d'un quart de tour autour de l'axe du mandrin pour faire venir le chant de la lame opposé à la denture contre un galet de réaction et assurer l'engagement d'un talon dans une encoche du coulisseau.

Ensuite le blocage de la lame est réalisé au moyen d'une vis portée par le coulisseau, coopérant avec la pointe à double pente de l'extrémité de fixation de la lame.

Cette vis est accessible à l'aide d'un tournevis spécial par un canal ménagé dans le corps de la machine.

On voit donc que cette autre machine connue présente les mêmes inconvénients que ceux énumérés précédemment de la machine utilisant des lames de scie à encoche.

L'invention vise à remédier aux inconvénients énoncés ci-dessus des machines connues en créant une scie sauteuse qui tout en étant d'une construction simple, permette de réaliser le montage et le démontage de la lame de scie de façon rapide et en ne nécessitant l'emploi d'aucun outil.

Elle a donc pour objet une scie sauteuse comprenant un corps dans lequel est monté déplaçable selon un mouvement rectiligne alternatif un coulisseau entraîné par un moteur électrique par l'intermédiaire de moyens de liaison mécanique et une lame de scie rendue solidaire du coulisseau par des moyens de fixation, les moyens de fixation comprenant un support solidaire du coulisseau et qui définit avec celui-ci un passage d'engagement pour la queue de la lame de scie et un organe de blocage escamotable solidaire du support et coopérant avec une découpe de la queue de la lame de scie, caractérisée en ce que la lame de scie étant du type comportant une queue de fixation dont la découpe définit des talons, le support de fixation est en équerre et fixé par un côté au coulisseau et comporte une première fente pratiquée dans le côté de l'équerre perpendiculaire au coulisseau et dont la dimension perpendiculairement au plan du coulisseau correspond à celle d'une zone de la queue de la lame de scie et une seconde fente pratiquée dans l'autre côté de l'équerre, débouchant dans la première fente et coincidant avec une rainure axiale du coulisseau, les fentes du support et la rainure axiale du coulisseau formant le passage d'engagement de la queue de la lame de scie..

L'invention sera mieux comprise à l'aide de la description qui va suivre, donnée uniquement à titre d'exemple et faite en se référant aux dessins annexés, sur lesquels :
- la Fig.1 est une vue schématique en perspective d'une scie sauteuse munie de moyens classiques de fixation de la lame de scie; et
- la Fig.2 est une vue schématique en perspective des moyens de fixation suivant l'invention d'une lame de scie sur le coulisseau d'une scie sauteuse.

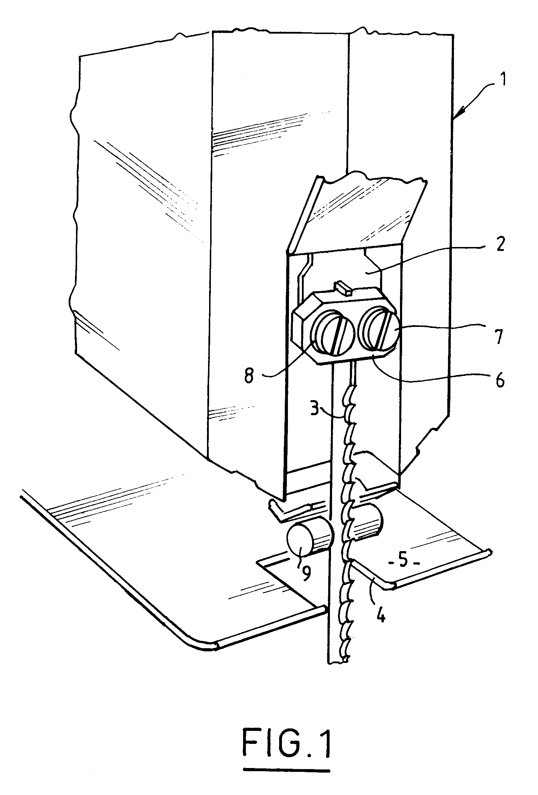

Sur la Fig.1, on a représenté une scie sauteuse de type connu dans le corps 1 de laquelle est monté un moteur électrique non représenté qui, par l'intermédiaire de moyens de liaison mécaniques également cachés par le corps, entraîne en translation selon un mouvement alternatif un coulisseau 2 auquel est fixée une lame de scie 3.

Cette dernière est déplacée par rapport au corps de la scie dans une échancrure 4 ménagée dans une semelle 5 perpendiculaire à sa direction de déplacement.

La queue de la lame de scie est fixée au coulisseau 2 par une bride 6 et des vis 7 avec interposition de rondelles 8. Au cours de ses déplacements, en translation la lame de scie prend appui contre un organe de réaction constitué par un galet 9 porté par le corps de la machine.

Ces moyens classiques de fixation de la lame de scie sur le coulisseau présentent les inconvénients énumérés plus haut d'un montage relativement long et compliqué nécessitant l'emploi d'un outil et présentant des risques de perte de certaines pièces de petites dimensions.

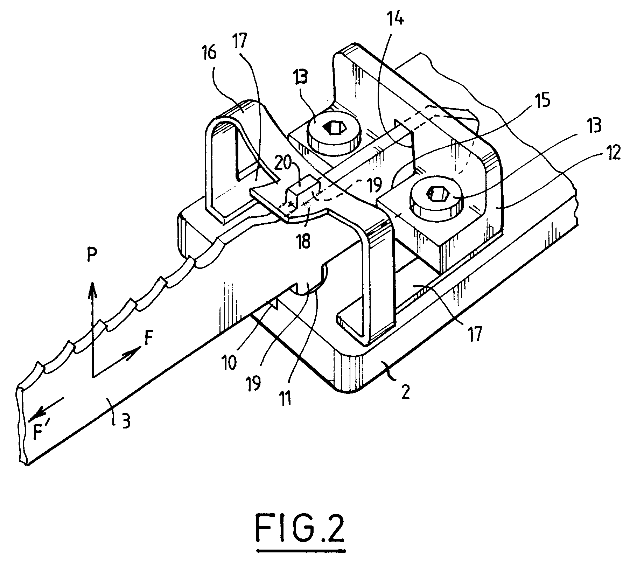

La Fig.2 montre en perspective des moyens de fixation suivant l'invention destinés à fixer une lame de scie dont la queue comporte deux talons.

Le coulisseau 2 de la machine comporte une rainure axiale 10 de guidage et de maintien de la lame de scie, et un trou 11 qui le traverse et dont le rôle va être précisé par la suite.

Sur le coulisseau est fixé un support 12 en équerre au moyen de vis 13 qui traversent le côté de l'équerre en appui contre le coulisseau. Dans le support sont ménagées une fente 14 pratiquée dans le côté de l'équerre perpendiculaire au coulisseau et une fente 15 pratiquée dans l'autre côté de l'équerre débouchant dans la fente 14 et coincidant avec la rainure 10 du coulisseau.

La fente 14 présente une dimension dans le plan du côté de l'équerre perpendiculaire au coulisseau 2, égale à la largeur de la queue de la lame de scie 3.

Le support 12 définit ainsi avec le coulisseau 2, un passage pour la lame de scie.

Les moyens de fixation comportent en outre un organe de blocage escamotable constitué par un ressort en étrier 16 comportant deux branches parallèles 17 s'étendant perpendiculairement à l'étrier et immobilisées par serrage entre le coulisseau 2 et le support 12.

Le ressort en étrier 16 se trouve en regard du trou 11 ménagé dans le coulisseau 2.

Il a une forme légèrement rentrante en son milieu et il est pourvu d'une languette d'actionnement 18.

La lame de scie 3 maintenue par les moyens de fixation décrits ci-dessus comporte une queue découpée pour former des talons 19 dont l'un est engagé dans le trou 11 du coulisseau qui assure ainsi l'immobilisation en translation de la lame 3.

L'extrémité de la lame 3 éloignée de sa denture est engagée dans le passage formé par les fentes 14,15 du support 12 et la rainure 10 du coulisseau 2.

Le ressort en étrier 16 assure le maintien du talon 19 dans le trou 11 en prenant appui de façon élastique sur le second talon 19 de la queue de la lame de scie opposé à celui engagé dans le trou 11.

Le blocage ou verrouillage de la lame de scie est assuré par l'engagement de son talon 19 opposé à celui se trouvant dans le trou 11 du coulisseau, dans un évidement 20 de forme correspondante ménagé dans la partie du ressort en étrier 16 située en contact avec ledit talon. L'évidement peut également être constitué par un trou traversant le ressort 16.

Le montage de la lame 3 est réalisé en exerçant à la fois à l'aide de la queue de la lame des actions selon les flèches P et F.

L'action selon la flèche P provoque l'écartement du ressort en étrier 16 par rapport au coulisseau 2 pour laisser passer la queue de la lame. L'action selon la flèche F assure l'engagement de la queue de la lame de scie 3 dans le passage formé par les fentes 14 et 15 du support 12 et la rainure 10 du coulisseau jusqu'à ce que le talon 19 situé du côté du coulisseau 2 se trouve en face du trou 11 de celui-ci.

Alors, le ressort en étrier provoque l'engagement de ce talon dans le trou 11 et assure ainsi le verrouillage de la lame 3 sur le coulisseau 2.

Le retrait de la lame est assuré en exerçant sur la lame une action de soulèvement dans le sens de la flèche P, ce qui provoque la sortie hors du trou 11 du talon 19 qui y est engagé.

En outre, on procède à une traction sur la lame de scie 3 dans le sens de la flèche F' afin de la retirer.

L'agencement qui vient d'être décrit comporte un support rapporté, fixé par des vis au coulisseau de la machine.

On peut cependant envisager de réaliser un support en une seule pièce avec le coulisseau.

L'agencement suivant l'invention permet un montage et un démontage rapides de la lame de scie sans recourir ni à l'emploi d'un outil quelconque ni au démontage de pièces de fixation, ce qui le rend particulièrement avantageux vis à vis des agencements connus.

## Revendications

1. Scie sauteuse comprenant un corps dans lequel est monté déplaçable selon un mouvement rectiligne alternatif un coulisseau (2) entraîné par un moteur électrique par l'intermédiaire de moyens de liaison mécanique et une lame de scie (3) rendue solidaire du coulisseau (2) par des moyens de fixation, les moyens de fixation comprenant un support (12) solidaire du coulisseau (2) et qui définit avec celui-ci un passage d'engagement (10,14,15) pour la queue de la lame de scie (3) et un organe de blocage escamotable (16) solidaire du support et coopérant avec une découpe de la queue de la lame de scie, caractérisée en ce que la lame de scie étant du type comportant une queue de fixation dont la découpe définit des talons (19), le support de fixation (12) est en équerre et fixé par un côté au coulisseau (2) et comporte une première fente (14) pratiquée dans le côté de l'équerre perpendiculaire au coulisseau (2) et dont la dimension perpendiculairement au plan du coulisseau (2) correspond à celle d'une zone de la queue de la lame de scie (3) et une seconde fente (15) pratiquée dans l'autre côté de l'équerre, débouchant dans la première fente (14) et coincidant avec une rainure axiale (10) du coulisseau (2), les fentes (14,15) du support (12) et la rainure axiale (10) du coulisseau (2) formant le passage d'engagement de la queue de la lame de scie.

2. Scie sauteuse suivant la revendication 1, caractérisée en ce que l'organe de blocage escamotable de la lame de scie (3) est constitué par un ressort en étrier (16) rendu solidaire du support (12) et se trouvant en regard d'un trou (11) de réception d'un premier talon (19) de la queue de la lame de scie (3), ménagé dans le coulisseau (2), le premier talon (19) assurant l'immobilisation axiale de la lame de scie (3) par rapport au coulisseau et le ressort en étrier assurant le maintien de la queue de la lame de scie (3) contre le coulisseau (2) par appui contre le second talon (19) de la queue de la lame de scie.

3. Scie sauteuse suivant l'une des revendications 1 et 2, caractérisée en ce que le ressort en étrier (16) comporte deux branches (17) parallèles s'étendant perpendiculairement à l'étrier et immobilisées par serrage entre le coulisseau (2) et le support (12) et en ce que l'étrier a une forme légèrement rentrante en son milieu et est pourvu d'une languette formant organe de manoeuvre.

4. Scie sauteuse suivant l'une des revendications 1 à 3, caractérisée en ce qu'il est prévu un organe (20) de blocage ou de verrouillage de la lame de scie (3) coopérant avec le second talon (19) de la lame de scie (3).

5. Scie sauteuse suivant la revendication 4, caractérisée en ce que ledit organe de blocage est constitué par un évidement ou un trou (20) de forme complémentaire au second talon (19), ménagé dans la partie du ressort en étrier (16) située en contact avec ledit talon (19).
